# NEUE EUROPÄISCHE PATENTSCHRIFT

(11) **EP 0 610 869 B2**
(45) Veröffentlichungstag und Bekanntmachung des Hinweises auf die Entscheidung über den Einspruch: **08.12.1999**
(45) Hinweis auf die Patenterteilung: 06.11.1996
(21) Anmeldenummer: 94101844.2
(22) Anmeldetag: 08.02.1994
(51) Int. Cl.: H02K 5/22, G01D 11/24, G01P 1/02, H01R 13/453

(54) **Winkelmesseinrichtung**
Angle measuring device
Capteur de position angulaire

(30) Priorität: 11.02.1993 DE 4304032
(43) Veröffentlichungstag der Anmeldung: 17.08.1994
(73) Patentinhaber: Dr. Johannes Heidenhain GmbH, 83292 Traunreut (DE)
(72) Erfinder: Fernsebner, Peter, D-83313 Siegsdorf (DE)

(56) Entgegenhaltungen:
- DE-A- 3 406 098
- DE-C- 2 631 966
- DE-C- 3 119 573
- DE-C- 3 511 095
- DE-U- 8 418 488
- Bürklin "Hauptkatalog '84" (1984), S. N10 und N37

## Beschreibung

Die Erfindung bezieht sich auf eine Winkelmeßeinrichtung gemäß dem Oberbegriff des Anspruches 1.

Derartige Winkelmeßeinrichtungen werden in der Fachsprache auch häufig als Drehgeber bezeichnet.

Drehgeber dienen als Meßwertaufnehmer für Drehbewegungen und - in Verbindung mit mechanischen Maßverkörperungen (wie Meßzahnstangen oder Gewindespindeln) - für lineare Bewegungen. Sie werden bei der Automatisation im allgemeinen Maschinenbau, bei Robotern und Handhabungsgeräten, Verstell- und Vorschubeinheiten sowie Geräten der Informationstechnik, Antennen, Richtgeräten aber auch bei Prüf- und Meßgeräten aller Art eingesetzt.

In der Meßtechnik lassen sich die Winkelmeßeinrichtungen ganz allgemein nach der Art der verwendeten Winkelverkörperung bzw. nach dem physikalischen Meßprinzip gliedern:

Teilscheiben mit bezifferter Strichteilung zur optisch-visuellen Ablesung oder auch Teilscheiben mit inkrementaler oder codierter Kreisteilung zur photoelektrischen Abtastung.

Über Anschlußkabel werden dem Drehgeber dabei die Betriebsspannung zugeführt und die Meßsignale abgenommen.

Herkömmliche Drehgeber weisen an ihrem dem Wellenflansch gegenüber liegenden Ende eine Kappe auf, die demontiert werden muß, wenn die Anschlußkabel befestigt oder gelöst werden sollen. Auch andere Montagearbeiten lassen sich häufig nur durch ein Abnehmen der Kappe nach hinten durchführen, wobei die Befestigung der Kappe in vielen Fällen durch radial angesetzte Schrauben erfolgt. Einen Ansatz zur Lösung dieser Probleme findet man in der DE 84 18 488 U1. Die Handhabung der herkömmlichen Drehgeber ist erschwert, wenn der zu montierende Drehgeber am Einbauort radial nicht zugänglich ist.

Der Erfindung liegt die Aufgabe zugrunde, einen Drehgeber zu schaffen, der vom Anwender leicht montierbar und demontierbar ist, und bei dem beispielsweise auch unter ungünstigen Einbaubedingungen das Anschlußkabel ausgetauscht werden kann.

Diese Aufgabe wird von einem Drehgeber mit den Merkmalen des Anspruches 1 gelöst.

Vorteilhafte Ausgestaltungen entnimmt man den Unteransprüchen

Die Vorteile des erfindungsgemäßen Drehgebers liegen darin, daß durch die axiale Zugänglichkeit der Gehäuseabdeckung auch im eingebauten Zustand das Anschlußkabel gewechselt bzw. überhaupt ein Anschlußkabel montiert werden kann. Des weiteren wird durch die schwenkbare Haube im geschlossenen Zustand eine hochfrequenzdichte Abschirmung hergestellt und eine mechanische Zugentlastung für das Anschlußkabel geschaffen.

Anhand der Zeichnungen soll die Erfindung noch näher erläutert werden.

Es zeigt
- Figur 1: eine Winkelmeßeinrichtung in Seitenansicht und
- Figur 2: eine Draufsicht auf die Winkelmeßeinrichtung.

Eine in Seitenansicht dargestellte Winkelmeßeinrichtung - auch als Drehgeber 1 bezeichnet - weist eine Drehgeberwelle 2, einen Wellenflansch 3 und ein Gehäuse 4 auf. Das Gehäuse 4 enthält eine segmentförmige Aussparung 5, in welcher ein Teil 6 einer Steckverbindung fest angeordnet ist. Das Teil 6 der Steckverbindung befindet sich auf einer Leiterplatte 7, die die nicht dargestellten elektronischen Bauelemente des Drehgebers 1 trägt.

Ferner weist das Gehäuse 4 eine Haube 8 auf. die konzentrisch um die Mittelachse 9 des Gehäuses 4 schwenkbar ist.

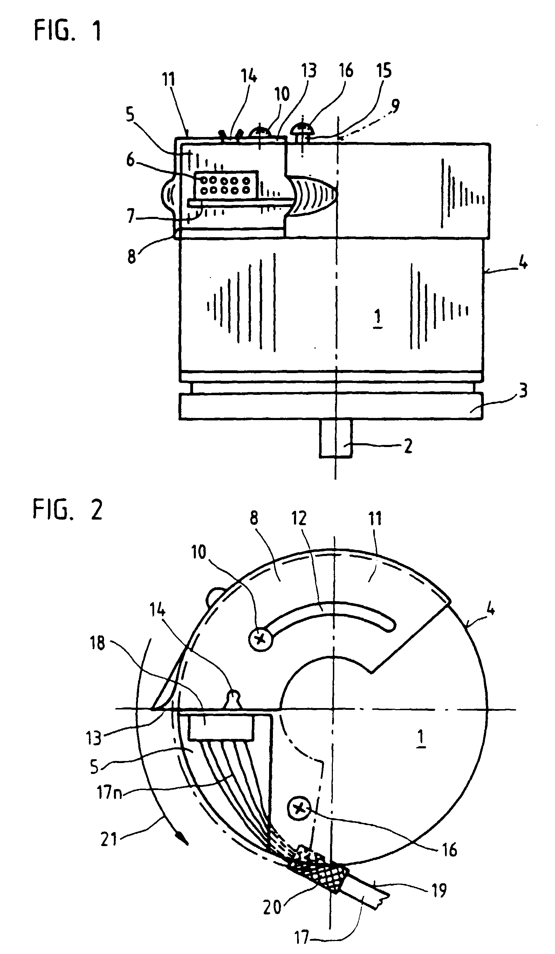

Aus der Draufsicht, die in Figur 2 gezeigt ist, ist die zylindrische Form des Gehäuses 4 ersichtlich. Die schwenkbare Haube 8 ist in ihrer offenen Stellung dargestellt. Sie kann in dieser Stellung durch eine Schraube 10 fixiert werden. Die Schraube 10 übernimmt in gelöster Stellung zusammen mit der Mantelfläche des zylindrischen Gehäuses 4 die Führung der schwenkbaren Haube 8, wenn diese in ihre Abdeckstellung verschwenkt wird. An ihrer Deckfläche 11 weist die Haube dazu einen Ausschnitt 12 auf, in dem der nicht näher bezeichnete Schaft der Schraube 10 verläuft.

Ferner enthält die Haube 8 in ihrer der Aussparung 5 zugewandten Stirnfläche 13 eine Ausnehmung 14, die im geschlossenen Zustand, also in der Abdeckstellung einen Schaft 15 einer weiteren Schraube 16 umgreift und einrastet.

Im offenen Zustand ist der Drehgeber 1 über die Aussparung 5 zugänglich, so daß Anschlußkabel 17 installiert werden können. Dazu trägt das Anschlußkabel 17 ein Gegenstück 18 einer Steckverbindung, welches mit dem anderen Teil 6 im Drehgeber 1 zusammensteckbar ist.

Das Anschlußkabel 17 weist einzelne elektrische Leitungen 17n auf. die von einem Kabelmantel 19 ummantelt werden. Ferner ist ein Abschirmungsgeflecht 20 Bestandteil des Anschlußkabels 17 Es dient der hochfrequenzdichten Abschirmung und wirkt in bekannter Weise mit dem Gehäuse 4 des Drehgebers 1 zusammen.

Beim Schließen der Haube 8. also bei deren Verschwenken um die Mittelachse 9 des Drehgebergehäuses 4 wird mit dem Einrasten der Ausnehmung 14 um den Schaft 15 der Schraube 16 sowohl die elektrische Abschirmung hergestellt, als auch eine mechanische Zugentlastung für das Anschlußkabel 17 geschaffen Die Schraube 16 wird anschließend fixiert. ist aber jederzeit lösbar, so daß die Haube 8 geöffnet und die Verkabelung durch Austausch des Anschlußkabels 17 jederzeit erneuert werden kann.

Die Schwenkbewegung der Haube 8 wird durch den konzentrischen Pfeil 21 symbolisiert.

Abweichend vom gezeigten Ausführungsbeispiel kann die Aussparung auch in der Mantelfläche des Gehäuses angeordnet sein, so wie am flanschseitigen Ende.

## Patentansprüche

1. Winkelmeßeinrichtung mit einem Gehäuse (4), welches eine segmentförmige Aussparung (5) aufweist, dadurch gekennzeichnet, daß
- in der Aussparung (5) des Gehäuses (4) ein Teil (6) einer mehrteiligen Steckverbindung (6, 18) fest angeordnet ist,
- die Aussparung (5) einen Aufnahmeraum für ein Gegenstück (18) bildet, das mit dem Teil (6) der Steckverbindung (6, 18) zusammensteckbar ist,
- am Gegenstück (18) der Steckverbindung (6, 18) ein aus dem Aufnahmeraum führendes Anschlußkabel (17) angeschlossen ist,
- eine schwenkbare Haube (8) vorgesehen ist, mit der die Aussparung (5) mit dem Teil (6) und dem daran angesteckten Gegenstück (18) der Steckverbindung (6, 18) vollständig abdeckbar ist, und
- die Haube (8) zumindest in dieser Abdeckstellung verriegelbar ist.

2. Winkelmeßeinrichtung nach Anspruch 1, dadurch gekennzeichnet, daß das Gehäuse (4) zylindrisch ausgebildet ist und die Haube (8) konzentrisch um die Mittelachse (9) des Gehäuses (4) schwenkbar ist, wobei die Haube (8) in einer ersten Schwenkposition die Aussparung (5) zugänglich macht und in einer zweiten Schwenkposition die Aussparung (5) abgedeckt ist.

3. Winkelmeßeinrichtung nach Anspruch 1, dadurch gekennzeichnet, daß die Haube (8) in der Abdeckstellung eine mechanische Zugentlastung für das Anschlußkabel (17) darstellt.

4. Winkelmeßeinrichtung nach Anspruch 1, dadurch gekennzeichnet, daß die Haube (8) in der Abdeckstellung eine hochfrequenzdichte Abschirmung bewirkt.

5. Winkelmeßeinrichtung nach Anspruch 1, dadurch gekennzeichnet, daß die Aussparung (5) an einem der beiden Enden des Gehäuses (4) oder in der Mantelfläche angeordnet ist.

6. Winkelmeßeinrichtung nach einem der vorhergehenden Ansprüche, dadurch gekennzeichnet, daß das in der Aussparung (5) des Gehäuses (4) fest angeordnete Teil (6) der Steckverbindung (6, 18) auf einer Leiterplatte (7) angeordnet ist, die elektrische Bauelemente des Drehgebers (1) trägt.

## Claims

1. An angle measuring device with a housing (4) which has a segmental recess (5), characterized in that
- one part of a multi-part plug connector is fixedly arranged in the recess (5) of the housing (4),
- the recess (5) forms a space for reception ofa complementary part (18) which can be plugged together with the part (6) the plug connector (6, 18),
- a connecting cable (17) leading out of the receiving space is connected to the complementary part (18) of the plug connector (6, 18),
- a pivoted hood (8) is provided, with which the recess (5) with the part (6) and the complementary part (18) of the plug connector (6, 18) plugged into it can be completely covered, and
- the hood (8) can be locked at least in this covering position.

2. An angle measuring device according to claim 1, characterized in that the housing (4) is of cylindrical shape and in that the hood (8) can pivot concentrically about the central axis (9) of the housing (4), whereby the hood makes the recess (5) accessible in first pivoted position and the recess (5) is covered in a second pivoted position.

3. An angle measuring device according to claim 1, characterized in that the hood (8) acts as a mechanical strain relief for the connecting cable (17) in the covering position.

4. An angle measuring device according to claim 1, characterized in that the hood (8) acts as a high-frequency screen in the covering position.

5. An angle measuring device according to claim 1, characterized in that the recess (5) is arranged in one of the two ends of the housing (4) or in the peripheral surface.

6. An angle measuring device according to any of the preceding claims, characterized in that the part (6) of the plug connector (6, 18) fixedly arranged in the recess (5) of the housing (4) is arranged on a circuit board (7) which carries electrical components of the rotary transducer (1).

## Revendications

1. Dispositif de mesure d'angles comportant un boîtier (4) pourvu d'un évidement (5) en forme de segment, caractérisé par le fait
- qu'un élément (6) d'un connecteur enfichable (6, 18) en plusieurs parties est monté fixe dans l'évidement (5) du boîtier (4),
- que l'évidement (5) forme un logement récepteur pour un élément (18) conjugué qui peut être enfiché avec l'élément (6) du connecteur enfichable (6, 18),
- qu'un câble de connexion menant à l'extérieur du logement récepteur est connecté à l'élément (18) conjugué,
- qu'il est prévu un couvercle (8) pivotant à l'aide duquel l'évidement (5) avec l'élément (6) et l'élément (18) conjugué du connecteur enfichable (6, 18) peut être entièrement couvert et
- que le couvercle (8) peut être verrouillé dans la position de fermeture au moins.

2. Dispositif de mesure d'angles selon la revendication 1, caractérisé par le fait que le boîtier (4) est cylindrique et par le fait que le couvercle (8) peut pivoter de manière concentrique autour de l'axe (9) du boîtier (4), le couvercle (8) permettant l'accès à l'évidement (5) dans une première position de pivotement et couvrant l'évidement (5) dans une seconde position de pivotement.

3. Dispositif de mesure d'angles selon la revendication 1, caractérisé par le fait que le couvercle (8), dans la position de fermeture, agit en tant que dispositif mécanique de compensation des efforts de traction pour le câble de liaison (17).

4. Dispositif de mesure d'angles selon la revendication 1, caractérisé par le fait que le couvercle (8), dans la position de fermeture, constitue un blindage imperméable aux fréquences élevées.

5. Dispositif de mesure d'angles selon la revendication 1, caractérisé par le fait que l'évidement (5) est disposé à l'une des deux extrémités du boîtier (4) ou dans la surface périphérique.

6. Dispositif de mesure d'angles selon une des revendications précédentes, caractérisé par le fait que l'élément (6) du connecteur enfichable (6, 18) monté fixe dans l'évidement (5) du boîtier (4) est disposé sur une carte à circuit imprimé (7) qui porte des composants électriques du codeur angulaire (1).
